# FASCICULE DE BREVET EUROPEEN

(11) **EP 2 799 331 B1**
(45) Date de publication et mention de la délivrance du brevet: **09.12.2015**
(21) Numéro de dépôt: 14001384.8
(22) Date de dépôt: 16.04.2014
(51) Int. Cl.: B64C 13/42, B64C 13/50

(54) **Système et procédé de commande d'un moyen de stabilisation en tangage d'un aéronef**
System und Methode zur Steuerung eines Mittels zur Nickstabilisierung eines Fluggerätes.
System and method for control of a pitch stabilisation mean of an aircraft

(30) Priorité: 03.05.2013 FR 1301034
(43) Date de publication de la demande: 05.11.2014
(73) Titulaire: Airbus Helicopters, 13725 Marignane Cedex (FR)
(72) Inventeur: Grohmann, Boris, D-81247 München (DE); Buro, Thomas, F-13013 Marseille (FR)
(74) Mandataire: GPI & Associés

(56) Documents cités:
- WO-A1-2008/038037
- US-A- 4 834 319
- US-B1- 6 461 265

## Description

La présente invention concerne un système et un procédé de commande d'un moyen de stabilisation en tangage, un ensemble de stabilisation et un aéronef muni de ce système. Plus particulièrement, l'invention se situe dans le domaine technique restreint des moyens de stabilisation en tangage des giravions.

Classiquement, un giravion comprend par exemple un fuselage s'étendant longitudinalement d'une extrémité avant vers une extrémité arrière de part et d'autre d'un plan antéropostérieur de symétrie, et selon une direction verticale d'une portion inférieure équipée d'un train d'atterrissage vers une portion supérieure munie d'une voilure tournante. La voilure tournante peut inclure un rotor principal de sustentation et de propulsion.

De plus, un giravion peut comporter un rotor arrière au niveau de son extrémité arrière. Le rotor arrière a notamment pour fonction de contrer le couple en lacet exercé par le rotor principal sur le fuselage. De plus, ce rotor arrière permet de contrôler les mouvements en lacet de l'hélicoptère.

La voilure tournante et le rotor arrière peuvent être pilotés par des commandes de vol reliées par des timoneries mécaniques à la voilure tournante et/ou au rotor arrière. Chaque timonerie mécanique peut être associée à un système de pilotage automatique incluant un vérin dénommé « vérin série » et un vérin dénommé « vérin parallèle » ou encore « vérin de trim ».

Le vérin série est commandé par un calculateur pour stabiliser l'aéronef. Un tel vérin série a une autorité limitée en possédant une course ne permettant pas de couvrir l'intégralité de la course de la commande de vol associée. Cependant, cette autorité limitée reste suffisante pour stabiliser l'aéronef autour d'une position médiane requise.

Le vérin série est par ailleurs un vérin à déplacement rapide pour permettre un ajustement rapide de la timonerie mécanique pour stabiliser l'aéronef, suite à un coup de vent par exemple.

Le vérin série est agencé en série sur la timonerie mécanique afin d'être transparent pour un pilote. Autrement dit, les mouvements d'un vérin série tendent à ne pas être ressentis par le pilote au travers des commande de vol.

Le vérin de trim peut par contre se substituer à un pilote pour agir sur une timonerie mécanique conformément à la course complète des commandes de vol associées. Ainsi, un vérin de trim a une autorité complète sur le déplacement de la timonerie mécanique. L'action du vérin de trim est perçue par un pilote. En effet, le vérin de trim étant placé en parallèle de la timonerie mécanique, ce vérin de trim déplace au moins une commande de vol au travers de la timonerie mécanique sur laquelle il agit.

Un calculateur peut commander un vérin de trim pour se substituer à un pilote. Toutefois, le calculateur peut aussi solliciter le vérin de trim pour recentrer la timonerie mécanique en fonction des déplacements requis du vérin série, notamment lorsque le vérin série atteint une butée.

Classiquement, un vérin de trim est un vérin à déplacement lent, par opposition au caractère rapide du vérin série.

Par ailleurs, un giravion comprend parfois des surfaces stabilisatrices additionnelles. Par exemple, il est usuel d'équiper un giravion d'une surface stabilisatrice de mouvements en lacet.

Une telle surface stabilisatrice de mouvements en lacet est généralement dénommée « dérive ».

De même, un giravion comporte parfois un moyen d'équilibrage et de stabilisation de mouvements en tangage dénommé plus simplement « moyen de stabilisation ». Un moyen de stabilisation présente une angulation dont la valeur absolue est comprise entre 0° et plus ou moins 90° avec ledit plan antéropostérieur. Ce moyen de stabilisation en tangage peut comporter éventuellement deux surfaces stabilisatrices en tangage s'étendant symétriquement de part et d'autre d'un plan antéropostérieur de symétrie du giravion en étant orthogonales à ce plan antéropostérieur ou encore en présentant une forme de V par exemple.

On nomme parfois un tel moyen de stabilisation de mouvements en tangage « empennage horizontal » ou plus simplement « empennage » par la suite. Le terme « empennage » est d'autant plus usité que le moyen de stabilisation n'est pas nécessairement horizontal. L'expression « moyen de stabilisation en tangage » est aussi utilisée.

Un empennage peut comprendre au moins une surface aérodynamique traversant de part en part l'extrémité arrière de l'aéronef selon une direction transversale, ou au encore au moins une surface aérodynamique non traversante s'étendant transversalement à partir de cette extrémité arrière d'un unique coté dudit plan antéropostérieur.

En vol stationnaire, l'équilibre en moment du tangage du giravion par rapport à un point fixe fait intervenir deux composantes prépondérantes : le moment dû au poids de l'aéronef et le moment dû au rotor principal d'avance et de sustentation qui, pour une masse donnée du giravion, est proportionnel au basculement du rotor principal par rapport à une direction verticale. Par ailleurs, les variations de centrage de l'hélicoptère induisent des variations de l'assiette de l'aéronef.

Lorsque le giravion est en vol de croisière, une autre composante du moment de tangage intervient : le moment aérodynamique qui s'exerce sur la cellule de l'aéronef. Suite à une variation d'incidence de la cellule par rapport à un écoulement d'air amont, le moment aérodynamique de tangage tend à écarter l'aéronef de sa position d'équilibre. Cette composante instable a pour conséquence d'augmenter les variations de l'assiette longitudinale liées au centrage par rapport aux variations observées en vol stationnaire.

Ces variations d'assiette ont des conséquences négatives. Des assiettes trop à piquer augmentent la traînée aérodynamique du giravion et réduisent en conséquence sa vitesse maximale. Elles conduisent également à une impression d'inconfort pour l'équipage et les passagers. Des assiettes trop à cabrer entraînent quant à elles des moments élevés sur le mât et le moyeu du rotor principal, avec des conséquences défavorables sur les durées de vie de ces éléments.

Le moyen de stabilisation en tangage placé vers l'arrière de l'aéronef vise à compenser l'instabilité de moment de tangage du fuselage et à équilibrer l'assiette du giravion.

Le dimensionnement d'un moyen de stabilisation est complexe. En effet, pour optimiser les performances d'un aéronef à vitesse élevée, le moyen de stabilisation en tangage est dimensionné de manière à obtenir une assiette longitudinale proche de l'assiette nulle. Ce dimensionnement est toutefois pénalisant pour le fonctionnement du rotor principal, sachant qu'il est plutôt souhaitable d'avoir une assiette à piquer élevée.

De plus, le dimensionnement effectué doit être satisfaisant pour les différentes configurations de masse, d'altitude, de centrage et éventuellement de configurations aérodynamiques externes possibles pour l'aéronef.

Eventuellement, l'efficacité du moyen de stabilisation en tangage peut être maximisée en augmentant sa surface alaire de manière à réduire les effets des perturbations liées aux variations de masse et de centrage du giravion.

Cependant, une telle solution est limitée en raison par exemple du phénomène de « bosse d'assiette » connu de l'homme du métier, résultant des interactions entre le rotor principal et le moyen de stabilisation en tangage. De plus, une surface alaire importante tend à entraîner des variations importantes de l'assiette de l'aéronef lors de la montée ou la descente de l'aéronef.

Les constructeurs ont cherché à remédier à ces inconvénients en créant un dispositif pour commander un moyen de stabilisation en tangage de manière à équilibrer un giravion en tangage, tout en maitrisant simultanément ses performances et les charges appliquées au moyeu d'un rotor principal, en s'affranchissant de l'effet des variations de centrage et en respectant les contraintes précitées nécessitant une limitation de la taille de ladite surface aérodynamique.

Ainsi, les documents US 2 424 882 et GB 657 796 prévoient un levier relié mécaniquement à un moyen de stabilisation en tangage pour contrôler l'incidence de ce moyen de stabilisation

Ces documents suggèrent un pilotage manuel. Toutefois, la complexité des giravions modernes peut conduire à l'asservissement de l'incidence du moyen de stabilisation en tangage selon des conditions de vol.

Le document FR 2456663 prévoit l'emploi d'un dispositif d'actionnement pour asservir l'incidence d'un plan de profondeur. Ce dispositif d'actionnement est muni de deux moteurs pour engendrer la translation d'une tige.

Certains aéronefs mettent en oeuvre deux actionneurs électriques montés dos à dos, l'un étant fixé à la poutre de queue dudit aéronef et l'autre à un moyen de stabilisation en tangage.

La redondance des actionneurs permet le fonctionnement en cas de panne d'un actionneur.

L'arrière plan technologique éloigné de l'invention inclut aussi les documents FR 2603866, US 20090206197, FR 2809372, US 4834319, WO 2008/038037 et US 6461265.

Le document FR 2603866 vise un système de commande de gouvernes d'avion dans une exécution de pilotage assisté dit « fly-by-wire » en langue anglaise avec une commande auxiliaire mécanique.

Il est à noter que le domaine technique des avions est éloigné du domaine technique des giravions. Un giravion répond notamment plus rapidement et plus vivement qu'un avion à des ordres de commande de vol. De plus, un avion présente une stabilité naturelle, à opposer au caractère instable des giravions qui tend à imposer un contrôle permanent de la stabilité.

Le document US 20090206197 présente deux actionneurs reliés à un volet, les deux actionneurs étant reliés entre eux.

Le document FR 2809372 est relatif à un aéronef à commande de vol électrique muni d'un actionneur pour manoeuvrer une gouverne.

Le document US 4834319 décrit un actionneur muni d'un premier moteur ayant une autorité sur une surface mobile limitée par une butée, et un deuxième moteur pour régler la marge du premier moteur par rapport à la butée.

La présente invention a alors pour objet de proposer un système de commande innovant d'un moyen de stabilisation en tangage tenant compte de la diversité des besoins durant un même vol et plus adapté qu'une simple bi-motorisation par redondance utilisée dans l'art antérieur.

L'invention concerne alors un système de commande pour commander un moyen de stabilisation en tangage d'un aéronef, ce système étant muni d'au moins un arbre de sortie pour mettre en rotation le moyen de stabilisation, le système ayant un premier actionneur et un deuxième actionneur.

Toutefois, le premier actionneur et le deuxième actionneur sont différents, le premier actionneur étant un actionneur à mouvement lent ayant une première partie entraînante effectuant un mouvement à une première vitesse, le deuxième actionneur étant un actionneur à mouvement rapide ayant une deuxième partie entraînante effectuant un mouvement à une deuxième vitesse supérieure à la première vitesse, le système de commande comprenant un dispositif de contrôle relié au premier actionneur et au deuxième actionneur pour requérir l'entraînement de l'arbre de sortie soit par la première partie entraînante soit par la deuxième partie entraînante soit par la première partie entraînante et la deuxième partie entraînante.

Le système de commande comprend une mémoire incluant :
- une première loi pour commander électriquement le premier actionneur en limitant l'autorité du premier actionneur sur la rotation de l'arbre de sortie à une faible plage angulaire, et
- une deuxième loi pour commander électriquement le deuxième actionneur en conférant à ce deuxième actionneur une pleine autorité pour la rotation dudit arbre de sortie selon une large plage angulaire.

Le deuxième actionneur peut par exemple avoir une autorité de 100% sur la large plage angulaire, alors que le premier actionneur a une autorité limitée à une faible plage angulaire de l'ordre de 25% de la large plage angulaire.

Chaque loi détermine donc l'inclinaison à atteindre par le moyen de stabilisation et dans quelles conditions. On entend par « loi » au moins une loi mathématique en tant que telle, éventuellement associée à des conditions d'application, ou encore tout moyen permettant au dispositif de contrôle de donner l'ordre adéquat à l'actionneur adéquat à chaque instant. Par exemple, une loi peut correspondre à un tableau de données fournissant l'ordre à donner en fonction d'au moins un paramètre et/ ou d'au moins une condition.

De plus, on entend par une commande électrique tout ordre non mécanique permettant de requérir un mouvement d'un actionneur, et donc un signal électrique en tant que tel mais aussi un signal électronique, électromagnétique ou optique par exemple. De tels signaux sont qualifiés par le terme « électrique » utilisé classiquement au sens large par l'homme du métier.

Le système de commande est donc muni de deux actionneurs distincts, chaque actionneur pouvant isolément incliner un moyen de stabilisation en tangage. Les actionneurs peuvent agir simultanément sur le moyen de stabilisation, ou encore alternativement.

Contrairement au document US 4834319, l'invention ne prévoit pas un actionneur muni d'un moteur rapide ayant une autorité-régulée mécaniquement par un moteur lent, mais prévoit un actionneur lent à autorité limitée et un actionneur rapide ayant une autorité non limitée pouvant chacun modifier l'incidence du moyen de stabilisation.

Les actionneurs peuvent être des actionneurs linéaires ou rotatifs, électriques, hydrauliques ou encore pneumatiques par exemple

Dès lors, ce système de commande peut utiliser deux actionneurs dimensionnés pour répondre exactement à leur fonction propre, à savoir un actionneur rapide et un actionneur lent pour obtenir respectivement un déplacement rapide et un déplacement lent du moyen de stabilisation en tangage.

L'encombrement et/ou la masse et/ou le coût du système peut tendre à être réduit par rapport à un système mettant en oeuvre deux gros moteurs redondés par exemple.

En effet, la demanderesse distingue les besoins en vol stationnaire et en vol d'avancement du giravion.

Au sol, le moyen de stabilisation en tangage peut être placé à l'horizontale. Ainsi, le risque d'endommagement du moyen de stabilisation en tangage par des projections d'objets venant du sol et entraînés par le vent créé par la voilure tournante est réduit.

Durant un vol stationnaire se produisant en dehors de la zone provoquant l'effet de sol, le moyen de stabilisation en tangage peut être braqué au maximum pour atteindre une inclinaison maximale vers le bas afin de ne pas être pris dans le souffle provenant de la voilure tournante et de ne pas engendrer une assiette à cabrer de l'appareil trop importante. Le moyen de stabilisation en tangage peut alors être incliné selon un angle de l'ordre 70 degrés par rapport à l'horizontal par exemple.

On rappelle que l'effet de sol est une notion connue de l'homme du métier. Cet effet de sol se produit usuellement entre le sol et une hauteur de l'ordre du diamètre d'un rotor principal de sustentation de l'aéronef.

Durant un vol stationnaire se produisant dans la zone générant l'effet de sol, l'énergie cinétique communiquée à l'air par le rotor principal de sustentation se transforme alors en énergie de pression sauf dans un anneau périphérique où les filets d'air sont déviés. Or, le moyen de stabilisation en tangage est usuellement agencé dans un tel anneau. Le moyen de stabilisation en tangage peut alors comporter une inclinaison comprise entre l'horizontale et l'inclinaison maximale précédente.

Durant ces phases, le giravion n'avance pas. Le couple requis pour manoeuvrer le moyen de stabilisation en tangage n'est donc pas nécessairement important, le moyen de stabilisation en tangage n'étant alors pas soumis à des forces aérodynamiques importantes.

Par contre, durant un vol d'avancement, le moyen de stabilisation en tangage est placé dans une position médiane sensiblement horizontale afin de limiter l'effet piqueur du fuselage qui augmente la traînée de l'aéronef.

Pour passer d'une phase de vol à une autre, le deuxième actionneur est utilisé pour positionner le moyen de stabilisation en tangage à l'inclinaison requise.

La phase de transition entre un vol stationnaire et un vol d'avancement se déroule durant un délai court. La deuxième vitesse de la deuxième partie entraînante du deuxième actionneur étant rapide, l'inclinaison requise peut être atteinte à l'issue de cette phase de transition.

Par ailleurs, durant chaque phase de vol, le premier actionneur peut être utilisé pour régler la position du moyen de stabilisation en tangage autour de la position requise afin de stabiliser l'aéronef. L'autorité du premier actionneur peut donc être limitée par rapport à l'autorité maximale du deuxième actionneur.

Durant un vol d'avancement, le moyen de stabilisation en tangage est déplacé par le deuxième actionneur dans une position prédéterminée afin de limiter l'effet piqueur qui augmente la traînée de l'hélicoptère. Cependant, le premier actionneur pilote le moyen de stabilisation en tangage dans un intervalle angulaire restreint autour de cette position prédéterminée afin de gérer la stabilisation dynamique de l'aéronef.

La première vitesse de la première partie entraînante du premier actionneur durant le vol d'avancement peut être très inférieure à la deuxième vitesse dans la mesure où le premier actionneur vise à ajuster plus précisément la position du moyen de stabilisation en tangage.

Les première et deuxième vitesses peuvent être des vitesses de déplacement linéaires ou encore des vitesses angulaires en fonction du type d'actionneurs utilisés.

De plus, le premier actionneur développe un couple plus faible que le deuxième actionneur.

Le dispositif de contrôle peut être un calculateur usuel communiquant avec des capteurs pour déterminer l'actionneur à solliciter et l'inclinaison à atteindre. Le calculateur peut par exemple comprendre un processeur et une mémoire non volatile, le processeur exécutant des instructions présentes dans la mémoire.

Par exemple, le dispositif de contrôle est lié à un dispositif de mesure de l'altitude du giravion et à un dispositif de mesure de la vitesse d'avancement du giravion pour déterminer la phase de vol. De plus, le dispositif de contrôle peut être relié à un dispositif estimant l'assiette longitudinale de l'aéronef pour requérir la stabilisation de l'aéronef en tangage en mettant en oeuvre le premier actionneur lent.

Le système de commande selon l'invention est très éloigné des vérins de trim et série utilisés dans des timoneries mécaniques de commande. De plus, ce système de commande a un fonctionnement contraire au fonctionnement de ces vérins en prévoyant un deuxième actionneur a grande autorité rapide et un premier actionneur à faible autorité lent, au lieu d'un vérin rapide à faible autorité et d'un vérin lent à grande autorité.

Dans ces conditions, le système met en oeuvre un premier actionneur pouvant être de petites dimensions pour présenter un mouvement lent et un deuxième actionneur pouvant être de grandes dimensions pour présenter un mouvement rapide. Par rapport à des dispositifs prévoyant des actionneurs de grandes dimensions redondés par sécurité, l'invention permet de minimiser l'encombrement du système.

Les actionneurs peuvent de plus être des actionneurs à balais qui sont économiquement intéressants.

Par ailleurs, les actionneurs sont différents et impliquent de fait des logiques de pilotage différentes ce qui peut tendre à optimiser la sécurité.

En outre, chaque actionneur est sollicité pendant un vol. Le système ne comporte donc pas un actionneur qui reste figé en vol en étant réservé à des cas de panne. L'invention favorise ainsi la surveillance des actionneurs et leur qualité de fonctionnement.

De plus, le premier actionneur est l'actionneur le plus utilisé en vol. Dès lors, l'invention propose d'utiliser majoritairement le plus petit actionneur. L'invention évite alors d'utiliser deux « gros moteurs » dont les capacités sont complètement sous-utilisées la plupart du temps.

Enfin, les actionneurs peuvent être commandés électriquement.

L'invention présente donc une pluralité d'avantages surprenants.

Le système peut de plus comprendre une ou plusieurs des caractéristiques additionnelles qui suivent.

La mémoire du système de commande peut inclure une troisième loi dégradée pour commander le premier actionneur en conférant à ce premier actionneur une pleine autorité sur la rotation de l'arbre de sortie selon ladite large plage angulaire lorsque le deuxième actionneur est en panne.

Lors d'un fonctionnement normal, le système de commande confère alors une autorité limitée au premier actionneur par le biais de la première loi.

Par contre, si le deuxième actionneur est en panne, le système de commande confère une autorité complète au premier actionneur pour couvrir toute la plage angulaire acceptable.

Le système de commande peut inclure en outre un dispositif d'alerte pour signaler la panne du deuxième actionneur à un pilote afin que ce pilote puisse adapter le pilotage à la lenteur du premier actionneur.

La mémoire du système de commande peut aussi inclure une quatrième loi dégradée utilisée lorsque le premier actionneur est en panne pour commander le deuxième actionneur en conférant à ce deuxième actionneur une pleine autorité sur la rotation de l'arbre de sortie selon ladite large plage angulaire afin d'atteindre une position prédéterminée du moyen de stabilisation dépendant de la phase de vol, et pour ajuster dynamiquement la position du moyen de stabilisation autour de ladite position prédéterminée.

Le deuxième actionneur remplit alors sa propre fonction mais aussi la fonction du premier actionneur.

Par suite, l'invention permet de respecter des consignes de sécurité même en cas de panne d'un actionneur.

Si le deuxième actionneur est en panne, l'autorité du premier actionneur est alors augmentée pour assurer la mobilité du moyen de stabilisation sur sa portée totale, à vitesse limitée (sur environ une minute au lieu d'une dizaine de seconde par exemple). On notera qu'il peut également être envisagé de solliciter exceptionnellement le premier actionneur dans ses capacités limites extrêmes pour mieux remplacer temporairement le deuxième actionneur, moyennant une action de maintenance adéquate lors de la réparation du deuxième actionneur en panne.

Si le premier actionneur est en en panne, le deuxième actionneur est capable de remplacer littéralement l'actionneur en panne sans que l'équipage en soit affecté lors du vol, le deuxième actionneur étant plus rapide et plus puissant que le premier actionneur.

Par ailleurs, le système de commande peut comporter un dispositif différentiel pour relier le premier actionneur et le deuxième actionneur à l'arbre de sortie.

Eventuellement, ce dispositif différentiel comprend :
- une couronne en prise mécanique avec la première partie entraînante,
- un pignon central en prise mécanique avec la deuxième partie entraînante,
- un porte-satellites portant une pluralité de pignons satellites interposés chacun entre le pignon central et la couronne, ledit porte-satellites engrenant l'arbre de sortie.

Le système de commande est alors un système simple permettant l'emploi du premier actionneur ou du deuxième actionneur.

Par ailleurs, le premier actionneur développe une première puissance et le deuxième actionneur développe une deuxième puissance, la deuxième puissance pouvant être supérieure à la première puissance.

En effet, le premier actionneur peut par exemple développer une puissance de sortie de l'ordre de 10 Watts pour répondre aux besoins, le deuxième actionneur développant une deuxième puissance de 100 Watts.

Outre un système de commande, l'invention vise un ensemble de stabilisation muni d'un moyen de stabilisation en tangage comprenant au moins une surface de stabilisation.

Cet ensemble est notamment remarquable en comportant le système de commande décrit précédemment, ce système de commande ayant un arbre de sortie relié à chaque surface de stabilisation pour les entraîner en rotation autour d'un axe de rotation.

De plus, l'invention concerne un aéronef muni d'une voilure tournante comprenant un tel ensemble de stabilisation.

Par ailleurs, l'invention concerne un procédé pour stabiliser un tel aéronef au cours duquel on positionne rapidement le moyen de stabilisation dans une position prédéterminée dépendant de la phase de vol en utilisant le deuxième actionneur, et on manoeuvre lentement le moyen de stabilisation pour stabiliser l'aéronef en ajustant dynamiquement la position du moyen de stabilisation autour de ladite position prédéterminée en utilisant le premier actionneur.

La première vitesse du premier actionneur peut être dimensionnée pour induire une vitesse angulaire du moyen de stabilisation comprise entre 0.1 degrés par seconde et 2 degrés par seconde, la deuxième vitesse du deuxième actionneur étant dimensionnée pour induire une vitesse angulaire du moyen de stabilisation comprise entre 7 degrés par seconde et 14 degrés par seconde.

Le deuxième actionneur est alors suffisamment rapide pour permettre la manoeuvre complète d'un moyen de stabilisation en tangage lors d'une phase de transition, le premier actionneur étant suffisamment rapide pour assurer la stabilité de l'aéronef sans être surdimensionné.

Les actionneurs permettent de positionner le moyen de stabilisation de manière adéquate pour par exemple optimiser la consommation de carburant ou encore pour diminuer les efforts exercés sur le mât d'un rotor de l'aéronef.

Eventuellement, en cas de panne du deuxième actionneur, on positionne le moyen de stabilisation dans la position prédéterminée en utilisant le premier actionneur, et on génère une alerte.

Par ailleurs, on peut positionner le moyen de stabilisation en utilisant le deuxième actionneur :
- dans une première position prédéterminée lorsque l'aéronef évolue dans une zone sujette à un effet de sol,
- dans une deuxième position prédéterminée lorsque l'aéronef n'est pas présent dans ladite zone et possède une vitesse d'avancement inférieure à un seuil,
- dans une troisième plage de position prédéterminée lorsque l'aéronef n'est pas présent dans ladite zone et possède une vitesse d'avancement supérieure audit seuil.

Le premier actionneur permet alors d'ajuster la position du moyen de stabilisation autour de la position prédéterminée adéquate.

L'invention et ses avantages apparaîtront avec plus de détails dans le cadre de la description qui suit avec des exemples de réalisation donnés à titre illustratif en référence aux figures annexées qui représentent :
- la figure 1, une vue schématique d'un aéronef selon l'invention,
- la figure 2, une vue présentant l'ensemble de stabilisation en tangage selon l'invention,
- les figures 3 et 4, des vues présentant le système de commande de l'ensemble de stabilisation, et
- la figure 5, un schéma présentant un procédé pouvant être appliqué par l'invention.

Les éléments présents dans plusieurs figures distinctes sont affectés d'une seule et même référence.

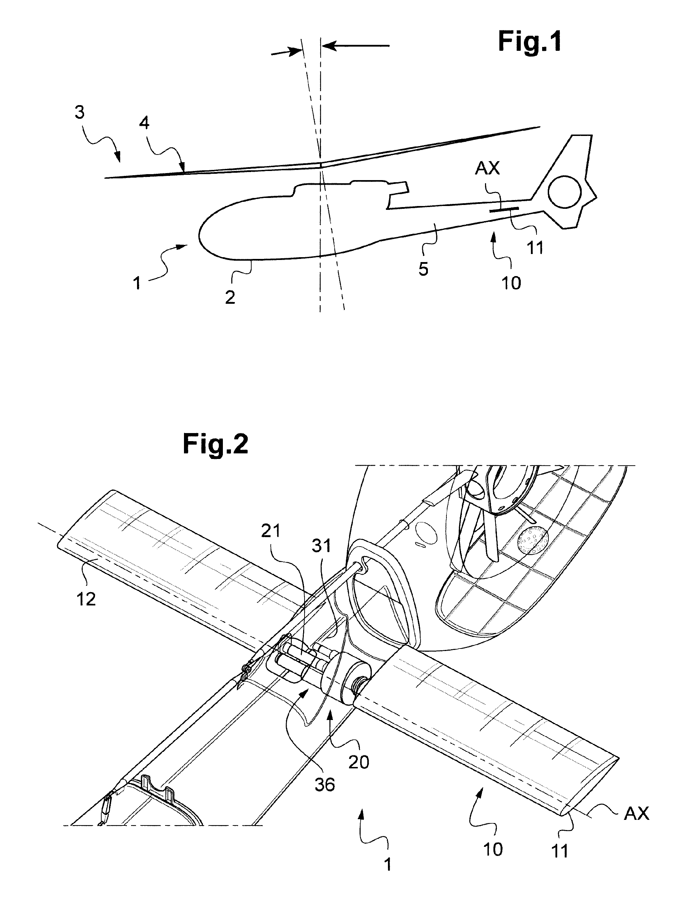

La figure 1 présente un aéronef 1 muni d'un fuselage 2 portant une voilure tournante 3. Par exemple, l'aéronef 1 est muni d'une voilure tournante 3 comprenant un rotor de sustentation et de propulsion 4.

Par ailleurs, l'aéronef 1 comprend un ensemble 5 de stabilisation en tangage. Cet ensemble 5 inclut un moyen de stabilisation en tangage comprenant au moins une surface de stabilisation 11 s'étendant transversalement à partir du fuselage 2.

En référence à la figure 2, le moyen de stabilisation en tangage 10 peut comprendre deux surfaces de stabilisation 11, 12 s'étendant de part et d'autre du fuselage. Cependant, le moyen de stabilisation peut par exemple comprendre une surface de stabilisation s'étendant uniquement d'un côté du fuselage.

De plus, l'ensemble 5 de stabilisation est muni d'un système 20 de commande pour commander l'incidence aérodynamique du moyen de stabilisation. Ce système 20 a pour fonction d'induire une rotation des surfaces de stabilisation 11, 12 autour d'un axe de rotation AX.

Le système 20 de commande inclut un arbre de sortie 21 relié au moyen de stabilisation 10, à savoir à chaque surface de stabilisation 11, 12. De plus, le système 20 possède un premier actionneur 31 et un deuxième actionneur 36 pour mettre en rotation l'arbre de sortie 21, et donc le moyen de stabilisation. Chaque actionneur inclut alors une partie entraînante mobile pouvant mettre en rotation l'arbre de sortie 21.

Les actionneurs peuvent être des moteurs électriques avec ou sans balais, des moteurs électriques générant un déplacement linéaire, des actionneurs hydrauliques, des actionneurs pneumatiques...

Le premier actionneur 31 et le deuxième actionneur 36 sont différents en générant des vitesses de déplacement d'un corps et des puissances différentes.

En effet, le premier actionneur 31 est un actionneur à mouvement lent ayant une première partie entraînante effectuant une rotation ou une translation à une première vitesse V1. Par contre, le deuxième actionneur 36 est un actionneur à mouvement rapide ayant une deuxième partie entraînante 37 effectuant une rotation ou une translation à une deuxième vitesse V2 supérieure à la première vitesse V1.

Par exemple, le premier actionneur 31 développe une première puissance P1 et le deuxième actionneur 36 développe une deuxième puissance P2 supérieure à la première puissance P1.

De plus, la première vitesse V1 peut être dimensionnée pour générer une vitesse angulaire du moyen de stabilisation comprise entre 0.1 degré par seconde et 2 degrés par seconde, la deuxième vitesse V2 étant dimensionnée pour engendrer une vitesse angulaire du moyen de stabilisation comprise entre 7 degrés par seconde et 14 degrés par seconde.

Dès lors et selon le procédé appliqué, on positionne rapidement le moyen de stabilisation 10 dans une position prédéterminée dépendant de la phase de vol en utilisant le deuxième actionneur 36. Ensuite, on manoeuvre lentement le moyen de stabilisation 10 pour stabiliser l'aéronef 1 en ajustant dynamiquement la position du moyen de stabilisation 10 autour de la position prédéterminée en utilisant le premier actionneur 31.

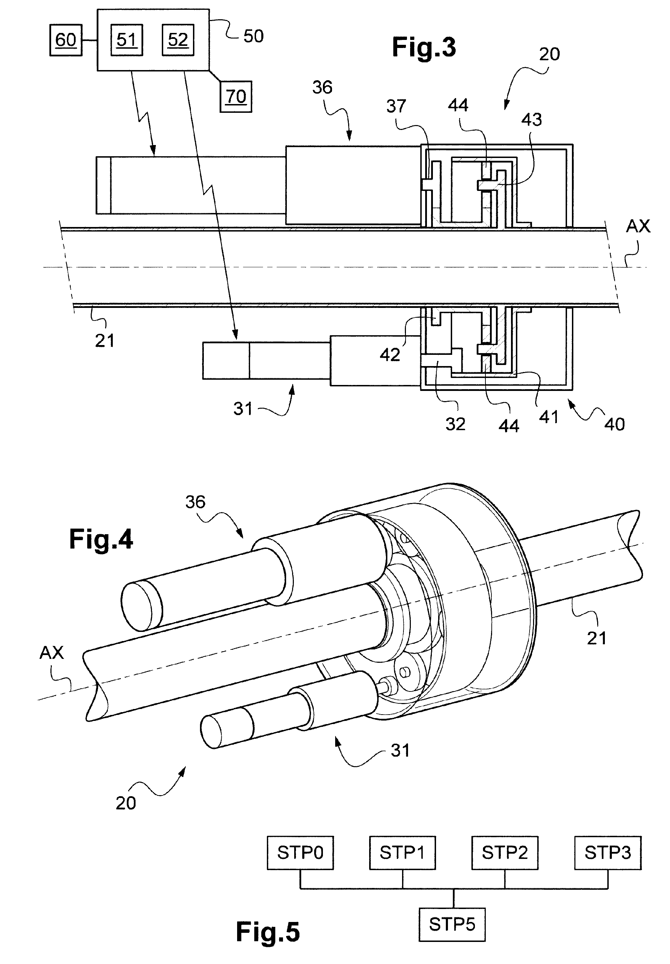

A cet effet et en référence à la figure 3, le système 20 de commande inclut un dispositif de contrôle 50 relié au premier actionneur 31 et au deuxième actionneur 36 par des liaisons filaires ou non filaires non représentées.

Ce dispositif de contrôle 50 peut être relié à des capteurs pour déterminer la phase de vol et les ordres à transmettre au premier actionneur 31 et au deuxième actionneur 36.

Ce dispositif de contrôle 50 peut comporter un organe 51 pour générer un ordre de commande à destination d'un actionneur, tel qu'un processeur par exemple, et un organe de détermination de l'ordre à donner telle qu'une mémoire 52.

Par exemple, la mémoire 52 stocke une première loi permettant de déterminer un premier ordre à donner au premier actionneur 31 pour requérir une rotation du moyen de stabilisation en tangage sur une faible plage angulaire. La mémoire 52 stocke aussi une deuxième loi permettant de déterminer un deuxième ordre à donner au deuxième actionneur 36 pour requérir une rotation du moyen de stabilisation en tangage sur une large plage angulaire.

Autrement dit, la première loi confère une autorité limitée au premier actionneur, alors que la deuxième loi confère une pleine autorité au deuxième actionneur.

Toutefois, la mémoire 52 peut inclure une troisième loi dégradée pour commander le premier actionneur 31 en conférant à ce premier actionneur 31 une pleine autorité. Eventuellement, le système 20 peut comprendre un système d'alerte 70 relié au dispositif de commande pour générer une alerte en cas de panne du deuxième actionneur.

Il est à noter que la panne du deuxième actionneur peut être détectée par des méthodes usuelles.

Une quatrième loi peut être mémorisée pour commander le deuxième actionneur en cas de panne du premier actionneur.

Par ailleurs, le système 20 de commande peut comporter un dispositif différentiel 40 pour relier le premier actionneur 31 et le deuxième actionneur 36 à l'arbre de sortie 21.

Ce dispositif différentiel 40 comprend une couronne 41 engrenée à la première partie entraînante 32 du premier actionneur 31. Un dispositif de type roulement à billes ou à rouleaux peut être interposé entre la couronne et l'arbre de sortie 21, la couronne et l'arbre de sortie étant coaxiaux. Un dispositif de type roulement à billes ou à rouleaux peut aussi être interposé entre la couronne et un carter du dispositif différentiel.

De même, un pignon central 42 est engrené à la deuxième partie entraînante 37 du deuxième actionneur 36. Un dispositif de type roulement à billes ou à rouleaux peut être interposé entre le pignon central et l'arbre de sortie 21, le pignon central et l'arbre de sortie étant coaxiaux.

Enfin, un porte-satellites 43 est solidaire en rotation de l'arbre de sortie. Par exemple, le porte-satellites 43 engrène l'arbre de sortie 21. Ce porte-satellites 43 porte une pluralité de pignons satellites 44 interposés chacun entre le pignon central 42 et la couronne 41.

Par conséquent, une rotation de la première partie entraînante et/ ou de la deuxième partie entraînante génère une rotation du porte-satellites et donc de l'arbre de sortie.

La figure 4 présente une vue à trois dimensions du système 20 de commande.

La figure 5 explicite un procédé pouvant être mise en oeuvre par l'aéronef selon l'invention.

Durant une phase initiale au sol STP0, le dispositif de contrôle 5 génère un ordre destiné au deuxième actionneur pour déplacer rapidement le moyen de stabilisation dans une position initiale correspondant à une angulation nulle par rapport à l'horizontale.

Par contre, lorsque l'aéronef 1 est présent dans une zone sujette à un effet de sol, l'aéronef se trouve dans une phase de vol dite première phase de vol STP 1 par commodité.

Cette première phase de vol se produit notamment lorsque l'aéronef décolle.

Par suite quand l'aéronef se trouve dans cette première phase de vol, le dispositif de contrôle 50 génère un ordre destiné au deuxième actionneur pour déplacer rapidement le moyen de stabilisation dans une première position prédéterminée. La première position prédéterminée correspond par exemple à une angulation de 30 degrés par rapport à ladite position initiale.

Quand la première position prédéterminée est atteinte, le dispositif de contrôle 50 génère un ordre destiné au premier actionneur pour déplacer lentement le moyen de stabilisation sur une plage restreinte, si nécessaire, pour maintenir l'assiette longitudinale de l'aéronef sensiblement constante.

Lorsque l'aéronef 1 n'est pas présent dans la zone sujette à l'effet de sol et possède une vitesse d'avancement inférieur à un seuil, l'aéronef se trouve dans une phase de vol dite deuxième phase de vol STP2 par commodité.

Cette deuxième phase de vol se produit notamment lorsque l'aéronef effectue un vol stationnaire en dehors de l'effet de sol.

Par suite quand l'aéronef se trouve dans cette deuxième phase de vol, le dispositif de contrôle 50 génère un ordre destiné au deuxième actionneur pour déplacer rapidement le moyen de stabilisation dans une deuxième position prédéterminée. La deuxième position prédéterminée correspond par exemple à une angulation de 70 degrés par rapport à ladite position initiale.

Quand la deuxième position prédéterminée est atteinte, le dispositif de contrôle 50 génère un ordre destiné au premier actionneur pour déplacer lentement le moyen de stabilisation sur une plage restreinte, si nécessaire, pour maintenir l'assiette longitudinale de l'aéronef sensiblement constante.

Lorsque l'aéronef 1 n'est pas présent dans la zone sujette à l'effet de sol et se déplace une vitesse d'avancement supérieure au seuil, l'aéronef se trouve dans une phase de vol dite troisième phase de vol STP3 par commodité.

Cette troisième phase de vol se produit notamment lorsque l'aéronef effectue un vol d'avancement.

Par suite quand l'aéronef se trouve dans cette troisième phase de vol, le dispositif de contrôle 50 génère un ordre destiné au deuxième actionneur pour déplacer rapidement le moyen de stabilisation dans une troisième position prédéterminée. La troisième position prédéterminée correspond par exemple à ladite position initiale.

Quand la deuxième position prédéterminée est atteinte, le dispositif de contrôle 50 génère un ordre destiné au premier actionneur pour déplacer lentement le moyen de stabilisation, si nécessaire, pour maintenir l'assiette longitudinale de l'aéronef sensiblement constante. Plus précisément, le moyen de stabilisation peut être déplacé dans un intervalle restreint de plus ou moins 10 degrés par exemple autour de la troisième position prédéterminée.

Indépendamment de la phase de vol, si le deuxième actionneur tombe en panne, le dispositif de contrôle commande le premier actionneur selon un mode dégradé pour le substituer au deuxième actionneur si nécessaire. Une alerte peut être générée en parallèle.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, les actionneurs peuvent être des actionneurs linéaires reliés à l'arbre de sortie par une came, afin qu'une translation d'une partie entraînante d'un actionneur génère une rotation de l'arbre de sortie.

## Revendications

1. Système (20) de commande pour commander un moyen de stabilisation (10) en tangage d'un aéronef (1), ledit système (20) étant muni d'au moins un arbre de sortie (21) pour mettre en rotation le moyen de stabilisation (10), ledit système (20) ayant un premier actionneur (31) et un deuxième actionneur (36),le premier actionneur (31) et le deuxième actionneur (36) étant différents, le premier actionneur (31) étant un actionneur à mouvement lent ayant une première partie entraînante (32) effectuant un mouvement à une première vitesse (V1), le deuxième actionneur (36) étant un actionneur à mouvement rapide ayant une deuxième partie entraînante (37) effectuant un mouvement à une deuxième vitesse (V2) supérieure à la première vitesse (V1), ledit système (20) de commande comprenant un dispositif de contrôle (50) relié au premier actionneur (31) et au deuxième actionneur (36) pour requérir l'entraînement dudit arbre de sortie (21) soit par la première partie entraînante (32) soit par la deuxième partie entraînante (37) soit par la première partie entraînante (32) et la deuxième partie entraînante (37), **caractérisé en ce que** le système (20) de commande comprend une mémoire (52) incluant une première loi pour commander électriquement le premier actionneur (31) limitant l'autorité du premier actionneur (31) sur la rotation dudit arbre de sortie (21) à une faible plage angulaire et une deuxième loi pour commander électriquement le deuxième actionneur (36) en conférant à ce deuxième actionneur (36) une pleine autorité pour la rotation dudit arbre de sortie (21) selon une large plage angulaire.

2. Système selon la revendication 1,
**caractérisé en ce que** ladite mémoire (52) inclut une troisième loi dégradée pour commander le premier actionneur (31) en conférant à ce premier actionneur (31) une pleine autorité sur la rotation dudit arbre de sortie (21) selon ladite large plage angulaire lorsque le deuxième actionneur (36) est en panne.

3. Système selon la revendication 2,
**caractérisé en ce que** ledit système comporte un dispositif d'alerte pour signaler la panne du deuxième actionneur à un pilote afin que ce pilote puisse adapter le pilotage à la lenteur du premier actionneur

4. Système selon la revendication 1,
**caractérisé en ce que** ladite mémoire inclut une quatrième loi dégradée utilisée lorsque le premier actionneur est en panne pour commander le deuxième actionneur en conférant à ce deuxième actionneur une pleine autorité sur la rotation de l'arbre de sortie selon ladite large plage angulaire afin d'atteindre une position prédéterminée du moyen de stabilisation dépendant de la phase de vol, et pour ajuster dynamiquement la position du moyen de stabilisation autour de ladite position prédéterminée.

5. Système selon l'une quelconque des revendications 1 à 4,
**caractérisé en ce que** ledit système (20) de commande comporte un dispositif différentiel (40) pour relier le premier actionneur (31) et le deuxième actionneur (36) à l'arbre de sortie (21).

6. Système selon la revendication 5,
**caractérisé en ce que** ledit dispositif différentiel (40) comprend :
- une couronne (41) en prise mécanique avec la première partie entraînante (32),
- un pignon central (42) en prise mécanique avec la deuxième partie entraînante (37),
- un porte-satellites (43) portant une pluralité de pignons satellites (44) interposés chacun entre le pignon central (42) et la couronne (41), ledit porte-satellites (43) engrenant l'arbre de sortie (21).

7. Système selon l'une quelconque des revendications 1 à 6,
**caractérisé en ce que** le premier actionneur (31) développe une première puissance (P1) et le deuxième actionneur (36) développe une deuxième puissance (P2), la deuxième puissance (P2) étant supérieure à la première puissance (P1).

8. Ensemble (5) de stabilisation muni d'un moyen de stabilisation (10) en tangage comprenant au moins une surface de stabilisation (11, 12),
**caractérisé en ce que** ledit ensemble (5) comporte un système (20) de commande selon l'une quelconque des revendications 1 à 7 muni d'un arbre de sortie (21) relié à chaque surface de stabilisation (11, 12) pour les entraîner en rotation autour d'un axe de rotation (AX).

9. Aéronef (1) muni d'une voilure tournante (3),
**caractérisé en ce que** cet aéronef (1) comporte un ensemble (5) de stabilisation selon la revendication 8.

10. Procédé pour stabiliser un aéronef (1) selon la revendication 9, au cours duquel on positionne rapidement le moyen de stabilisation (10) dans une position prédéterminée dépendant de la phase de vol en utilisant le deuxième actionneur (36), et on manoeuvre lentement le moyen de stabilisation (10) pour stabiliser l'aéronef (1) en ajustant dynamiquement la position du moyen de stabilisation (10) autour de ladite position prédéterminée en utilisant le premier actionneur (31).

11. Procédé selon la revendication 10,
caractérisé en ce la première vitesse (V1) du premier actionneur est dimensionnée pour induire une vitesse angulaire du moyen de stabilisation comprise entre 0.1 degrés par seconde et 2 degrés par seconde, la deuxième vitesse (V2) du deuxième actionneur étant dimensionnée pour induire une vitesse angulaire du moyen de stabilisation comprise entre 7 degrés par seconde et 14 degrés par seconde.

12. Procédé selon la revendication 10,
**caractérisé en ce qu'**en cas de panne du deuxième actionneur (36), on positionne le moyen de stabilisation (10) dans ladite position prédéterminée en utilisant le premier actionneur (31), et on génère une alerte.

13. Procédé selon l'une quelconque des revendications 10 à 12,
**caractérisé en ce qu'**on positionne le moyen de stabilisation (10) :
- dans une première position prédéterminée lorsque l'aéronef (1) évolue dans une zone sujette à un effet de sol,
- dans une deuxième position prédéterminée lorsque l'aéronef (1) n'est pas présent dans ladite zone et possède une vitesse d'avancement inférieure à un seuil,
- dans une troisième plage de position prédéterminée lorsque l'aéronef (1) n'est pas présent dans ladite zone et possède une vitesse d'avancement supérieure audit seuil.

## Patentansprüche

1. System (20) zur Steuerung eines Mittels (10) zur Nickstabilisierung eines Luftfahrzeugs (1), wobei das System (20) mit mindestens einer Ausgangswelle (21) versehen ist zum Drehen der Stabilisierungsmittel (10), wobei das System (20) ein erstes Stellglied (31) und ein zweites Stellglied (36) aufweist, wobei das erste Stellglied (31) und das zweite Stellglied (36) voneinander verschieden sind, wobei das erste Stellglied (31) ein sich langsam bewegendes Stellglied ist mit einem ersten Antriebsteil (32), das eine Bewegung mit einer ersten Geschwindigkeit (V1) ausführt, das zweite Stellglied (36) ein sich schnell bewegendes Stellglied ist mit einem zweiten Antriebsteil (37), das eine Bewegung mit einer zweiten Geschwindigkeit (V2) ausführt, die größer als die erste Geschwindigkeit (V1) ist, wobei das Steuersystem (20) eine Steuereinrichtung (50) aufweist, die mit dem ersten Stellglied (31) und dem zweiten Stellglied (36) verbunden ist zur Anforderung des Antriebs der Ausgangswelle (21) entweder durch das erste Antriebsteil (32) oder durch das zweite Antriebsteil (37) oder durch das erste Antriebsteil (32) und das zweite Antriebsteil (37),
**dadurch gekennzeichnet, dass** das Steuersystem (20) einen Speicher (52) aufweist, welcher eine erste Regel umfasst zur elektrischen Steuerung des ersten Stellglieds (31), welche die Befehlsgewalt des ersten Stellglieds (31) über die Drehung der Ausgangswelle (21) auf einen kleinen Winkelbereich begrenzt, und welcher eine zweite Regel umfasst zur elektrischen Steuerung des zweiten Stellgliedes (36), welche diesem zweiten Stellglied (36) eine volle Befehlsgewalt über die Drehung der Ausgangswelle (21) in einem großen Winkelbereich erteilt.

2. System nach Anspruch 1,
**dadurch gekennzeichnet, dass** der Speicher (52) eine dritte herabgestufte Regel umfasst zur Steuerung des ersten Stellglieds (31), in dem diesem ersten Stellglied (31) eine volle Autorität über die Drehung der Ausgangswelle (21) in dem großen Winkelbereich erteilt wird, wenn das zweite Stellglied (36) defekt ist.

3. System nach Anspruch 2,
**dadurch gekennzeichnet, dass** das System eine Warnvorrichtung aufweist, um einem Piloten den Defekt des zweiten Stellglieds zu melden, damit dieser Pilot die Steuerung an die Langsamkeit des ersten Stellglieds anpassen kann.

4. System nach Anspruch 1,
**dadurch gekennzeichnet, dass** der Speicher eine vierte herabgestufte Regel umfasst, die verwendet wird, wenn das erste Stellglied defekt ist, um das zweite Stellglied zu steuern, indem diesem zweiten Stellglied eine volle Autorität über die Drehung der Ausgangswelle in dem großen Winkelbereich erteilt wird, um eine vorbestimmte Stellung des Stabilisierungsmittels zu erreichen, die von der Flugphase abhängt, und um dynamisch die Stellung des Stabilisierungsmittels um diese vorbestimmte Stellung herum einzustellen.

5. System nach einem der Ansprüche 1 bis 4,
**dadurch gekennzeichnet, dass** das Steuersystem (20) ein Differential (40) aufweist zur Verbindung des ersten Stellglieds (31) und des zweiten Stellglieds (36) mit der Ausgangswelle (21).

6. System nach Anspruch 5,
**dadurch gekennzeichnet, dass** das Differential (40) aufweist:
- einen Zahnkranz (41), der in mechanischem Kontakt mit dem ersten Antriebsteil (32) steht,
- ein zentrales Zahnrad (42), das mit dem zweiten Antriebsteil (37) in mechanischem Eingriff steht,
- einen Planetenzahnradträger (43), der eine Mehrzahl von Planetenzahnrädern (44) trägt, die jeweils zwischen dem zentralen Zahnrad (42) und dem Zahnkranz (41) angeordnet sind, wobei der Planetenzahnradträger (43) mit der Ausgangswelle (21) in Eingriff steht.

7. System nach einem der Ansprüche 1 bis 6,
**dadurch gekennzeichnet, dass** das erste Stellglied (31) eine erste Leistung (P1) entwickelt und das zweite Stellglied (36) eine zweite Leistung (P2) entwickelt, wobei die zweite Leistung (P2) größer als die erste Leistung (P1) ist.

8. Stabilisierungseinheit (5) mit einem Mittel (10) zur Nickstabilisierung mit mindestens einer Stabilisierungsfläche (11, 12),
**dadurch gekennzeichnet, dass** die Einheit (5) ein Steuersystem (20) nach einem der Ansprüche 1 bis 7 aufweist, das mit einer Ausgangswelle (21) versehen ist, die mit jeder Stabilisierungsfläche (11, 12) verbunden ist, um diese um eine Drehachse (AX) zu drehen.

9. Luftfahrzeug (1) mit einer Drehflügelanordnung (3),
**dadurch gekennzeichnet, dass** dieses Luftfahrzeug (1) eine Stabilisierungseinheit nach Anspruch 8 aufweist.

10. Verfahren zur Stabilisierung eines Luftfahrzeugs (1) nach Anspruch 9, während dem das Stabilisierungsmittel (10) schnell in eine vorbestimmte Stellung in Abhängigkeit von der Flugphase positioniert wird unter Verwendung des zweiten Stellglieds (36) und während dem das Stabilisierungsmittel (10) langsam betätigt wird, um das Luftfahrzeug (1) zu stabilisieren, indem die Stellung des Stabilisierungsmittels (10) um die vorbestimmte Stellung herum eingestellt wird unter Verwendung des ersten Stellglieds (31).

11. Verfahren nach Anspruch 10,
**dadurch gekennzeichnet, dass** die erste Geschwindigkeit (V1) des ersten Stellglieds ausgelegt ist, um eine Winkelgeschwindigkeit des Stabilisierungsmittels zu bewirken, die zwischen 0,1 Grad pro Sekunde und 2 Grad pro Sekunde liegt, wobei die zweite Geschwindigkeit (V2) des zweiten Stellglieds ausgelegt ist, um eine Winkelgeschwindigkeit des Stabilisierungsmittels zwischen 7 Grad pro Sekunde und 14 Grad pro Sekunde zu bewirken.

12. Verfahren nach Anspruch 10,
**dadurch gekennzeichnet, dass** im Fall eines Defekts des zweiten Stellglieds (36) das Stabilisierungsmittel (10) in der vorbestimmten Stellung positioniert wird unter Verwendung des ersten Stellglieds (31) und ein Alarm ausgelöst wird.

13. Verfahren nach einem der Ansprüche 10 bis 12,
**dadurch gekennzeichnet, dass** das Stabilisierungsmittel (10) positioniert wird:
- in einer ersten vorbestimmten Stellung, wenn das Luftfahrzeug (1) sich in einem Bereich bewegt, der einem Bodeneffekt ausgesetzt ist,
- in einer zweiten vorbestimmten Stellung, wenn das Luftfahrzeug (1) sich nicht in diesem Bereich befindet und eine Vortriebsgeschwindigkeit unterhalb eines Schwellenwerts aufweist,
- in einem dritten vorbestimmten Stellungsbereich, wenn das Luftfahrzeug (1) sich nicht in diesem Bereich befindet und eine Vortriebsgeschwindigkeit aufweist, die größer als dieser Schwellenwert ist.

## Claims

1. Control system (20) for controlling a pitch stabilisation means (10) of an aircraft (1), said system (20) being provided with at least one output shaft (21) for setting in rotation the stabilisation means (10), said system (20) having a first actuator (31) and a second actuator (36), the first actuator (31) and the second actuator (36) being different, the first actuator (31) being a slow-moving actuator having a first driving portion (32) which brings about movement at a first speed (V1), the second actuator (36) being a fast-moving actuator having a second driving portion (37) which brings about movement at a second speed (V2) greater than the first speed (V1), said control system (20) comprising a control device (50) connected to the first actuator (31) and to the second actuator (36) in order to cause said output shaft (21) to be driven either by the first driving portion (32) or by the second driving portion (37) or by the first driving portion (32) and the second driving portion (37), **characterised in that** the control system (20) comprises a memory (52) including a first relationship for electrically controlling the first actuator (31) limiting the authority of the first actuator (31) over the rotation of said output shaft (21) to a small angular range and a second relationship for electrically controlling the second actuator (36) by giving the second actuator (36) full authority for the rotation of said output shaft (21) in a large angular range.

2. System according to claim 1,
**characterised in that** said memory (52) includes a degraded third relationship for controlling the first actuator (31) by giving the first actuator (31) full authority over the rotation of said output shaft (21) in said large angular range when said second actuator (36) has failed.

3. System according to claim 2,
**characterised in that** said system comprises an alert device for signalling failure of the second actuator to a pilot in order to enable the pilot to adapt the piloting to the slowness of the first actuator.

4. System according to claim 1,
**characterised in that** said memory includes a degraded fourth relationship for use when the first actuator has failed in order to control the second actuator by giving the second actuator full authority over the rotation of the output shaft in said large angular range in order to reach a predetermined position of the stabilisation means depending on the stage of flight, and in order to adjust the position of the stabilisation means dynamically about said predetermined position.

5. System according to any one of claims 1 to 4, **characterised in that** said control system (20) comprises a differential device (40) for connecting the first actuator (31) and the second actuator (36) to the output shaft (21).

6. System according to claim 5,
**characterised in that** said differential device (40) comprises:
- a ring gear (41) mechanically engaged with the first driving portion (32),
- a sun gear (42) mechanically engaged with the second driving portion (37),
- a planet carrier (43) carrying a plurality of planet gears (44), each interposed between the sun gear (42) and the ring gear (41), said planet carrier (43) meshing with the output shaft (21).

7. System according to any one of claims 1 to 6, **characterised in that** the first actuator (31) develops a first power (P1) and the second actuator (36) develops a second power (P2), the second power (P2) being greater than the first power (P1).

8. Stabilisation assembly (5) provided with a pitch stabilisation means (10) comprising at least one stabilisation surface (11, 12),
**characterised in that** said assembly (5) comprises a control system (20) according to any one of claims 1 to 7 provided with an output shaft (21) connected to each stabilisation surface (11, 12) in order to drive them in rotation about an axis of rotation (AX).

9. Aircraft (1) provided with a rotary wing (3), **characterised in that** the aircraft (1) comprises a stabilisation assembly (5) according to claim 8.

10. Method for stabilising an aircraft (1) according to claim 9, in which method the stabilisation means (10) is quickly positioned in a predetermined position depending on the stage of flight by using the second actuator (36), and the stabilisation means (10) is operated slowly for stabilising the aircraft (1) by dynamically adjusting the position of the stabilisation means (10) about said predetermined position by using the first actuator (31).

11. Method according to claim 10,
**characterised in that** the first speed (V1) of the first actuator is sized to induce an angular speed of the stabilisation means of between 0.1 degrees per second and 2 degrees per second, the second speed (V2) of the second actuator being sized to induce an angular speed of the stabilisation means of between 7 degrees per second and 14 degrees per second.

12. Method according to claim 10,
**characterised in that** in the event of failure of the second actuator (36), the stabilisation means (10) is positioned in said predetermined position by using the first actuator (31), and an alert is generated.

13. Method according to any one of claims 10 to 12, **characterised in that** the stabilisation means (10) are positioned:
- in a first predetermined position when the aircraft (1) is flying in a zone subject to a ground effect,
- in a second predetermined position when the aircraft (1) is not present in said zone and possesses a forward speed below a threshold,
- in a third predetermined position range when the aircraft (1) is not present in said zone and possesses a forward speed greater than said threshold.
